# EUROPEAN PATENT SPECIFICATION

(11) **EP 2 714 471 B1**
(45) Date of publication and mention of the grant of the patent: **01.07.2015**
(21) Application number: 11723057.3
(22) Date of filing: 31.05.2011
(51) Int. Cl.: B60R 11/00

(54) **A HOLDING MEANS FOR HOLDING AN ELECTRONIC DEVICE TO A VEHICLE COMPONENT, IN PARTICULAR A WINDSCREEN OF A VEHICLE**
HALTEEINRICHTUNG ZUR BEFESTIGUNG EINER ELEKTRONISCHEN VORRICHTUNG AN EINER FAHRZEUGKOMPONENTE, INSBESONDERE EINER WINDSCHUTZSCHEIBE EINES FAHRZEUGES
MOYEN DE MAINTIEN DESTINÉ À MAINTENIR UN DISPOSITIF ÉLECTRONIQUE SUR UN COMPOSANT DE VÉHICULE, EN PARTICULIER UN PARE-BRISE D'UN VÉHICULE

(43) Date of publication of application: 09.04.2014
(73) Proprietor: Valeo Schalter und Sensoren GmbH, 74321 Bietigheim-Bissingen (DE)
(72) Inventor: MOIZARD, Julien, 75005 Paris (FR); BIERMANN, Eric, NL-2318 AR Leiden (NL)
(86) International application number: PCT/EP2011/058958
(87) International publication number: WO 2012/163407

(56) References cited:
- WO-A2-2006/019996
- DE-U1-202008 011 990
- US-A- 5 573 164
- US-A1- 2005 236 545
- US-A1- 2010 286 904

## Description

The invention relates to a holding means, which serves for holding an electronic device on a vehicle component, namely in particular on a windscreen of a vehicle. The holding means comprises a basic body, which is designed for carrying the electronic device. The holding means also comprises a fastening unit, which is designed for attaching the basic body to the vehicle component.

Such holding means are already known from the prior art in a plurality of embodiments. The known holding means for mobile phones as a rule have a holder or a carrier, to which the mobile phone is fastened. The holder itself can be mounted by means of a fastening unit to the windscreen of the vehicle. For fastening the holder to the windscreen in the prior art commonly suction cups are used.

The document US 2010/0286904 A1 describes a device assembly for performing a driver assistance function. The device assembly includes a mobile terminal as well as a holder removable installed in the vehicle for temporarily receiving the mobile terminal. An image recording device is connected to the holder, which is connectable to the mobile terminal via an image signal line and an electrical interface provided on the holder. The holder can be designed as a section attachment device and can be attached to a vehicle windshield. The holder can receive the mobile terminal via a receptacle arm, in which the appropriate interface for transmitting the image signals and for the power supply are positioned.

The document WO 2005/090124 A1 discloses that an image processing module for processing camera image data of the environment of a motor vehicle on the one hand and a display for displaying the images on the other hand can be formed by a microcomputer, in particular a palmtop, a personal digital assistant or a mobile telephone. The integration of the image processing module in the vehicle interior guarantees that the image processing module is not exposed to large temperature variations or extremely high temperatures.

US 2005/2365 45 A1 disclose a holding means according to the preamble of claim 1.

Presently, the interest is focussed on the attaching of a mobile phone to the basic body or the holder of the holding means. For attaching the mobile phone to the holding means in the prior art already numerous concepts have been developed: The mobile phone may for instance be attached by means of a snap-on connection, a plug-in connection, or the like. All these known concepts have the disadvantage that the holding means is exclusively suited for holding a single type of mobile phone. Thus, a holding means for a mobile phone of a certain company cannot hold a mobile phone of another company. This particularly because the mobile phones of different manufacturers each have different sizes. Even if the electronic connections for mobile phones are standardized, one and the same holding means due to the different sizes of the mobile phones cannot be employed for mobile phones of different manufacturers.

It is an object of the invention to provide a solution, how to employ a holding means of the initially named kind for electronic devices of different manufacturers, namely independently of the size of the electronic device.

According to the invention, this object is solved by a holding means with the features of patent claim 1. Advantageous implementations of the invention are the subject matter of the dependent claims, of the description and of the figures.

A holding means according to the invention is designed for holding an electronic device to a vehicle component, in particular to a windscreen of a vehicle. The holding means comprises a basic body as well as a fastening unit. The basic body is designed for bearing or carrying the electronic device, whilst the fastening unit is designed for fastening the basic body to the vehicle component. According to the invention, a suction cup is provided at the basic body for attaching the electronic device to the basic body.

The invention is based on the realisation that the holding means for mobile phones of different manufacturers can be employed, when a suction cup is provided for attaching the mobile phone to the holding means. The invention now takes the path of employing a suction cup not or not only for attaching a holding means to the vehicle component (windshield), but (also) for attaching the electronic device to the holding means. Hereby the electronic device independently of its size may be mounted to the basic body of the holding means. This means that for instance mobile phones of different manufacturers can be attached to the basic body of the holding means. For this purpose the user merely needs to press the electronic device against the suction cup, and the suction cup is firmly attached to the electronic device by suction. The attachment of the electronic device to the holding means thus merely requires a smooth surface of the electronic device.

The fastening unit, which is separate from the suction cup, serves for fastening the basic body to the vehicle component. Also this fastening unit may include a suction cup, by means of which the holding means can be attached to the vehicle component - in particular to the windscreen.

The suction cup for the electronic device in one embodiment is arranged on a front face of a rectangular and sheet-like holder or carrier of the basic body. Through such rectangular holder the electronic device is for instance protected against solar radiation.

The basic body may have a connection part comprising an electronic interface for the electronic device. This means that the electronic interface serves for connecting the electronic device and thus for transmitting signals between the electronic device and the holding means - or possibly a different device attached to the holding means. Via such interface the electronic device can also be supplied with electric energy. It is particularly advantageous if the connection part is pivotably mounted on the holder. Thus the electronic device - in particular a mobile phone - firstly can be connected to the electronic interface and then be pivoted together with the connection part, in order to reach the suction cup on the front face of the carrier. The connection part can be provided in the form of a hook that immediately connects to the edge of the carrier. The hook may have a first portion, which is connected with the holder, and a second portion, which includes with the first portion an angle from a range of values from 80 ° to 100 °, in particular a right angle. The first portion can be hinged to the holder, and the electronic interface can be arranged on the second portion, which is spaced apart from the holder. The connection part in principle facilitates an easy fastening of the electronic device to the holder by way of connecting the device to the interface and subsequent pivoting of the device together with the connection part towards the suction cup. Once the device reaches the suction cup, the electronic device is fastened to the holding means.

Mechanical demounting means are provided, which are formed for bending or deforming the suction cup and hereby for releasing a connection between the suction cup and the electronic device. This means that the demounting means can open a vacuum chamber formed between the suction cup and the electronic device, in order to release the connection. This is achieved by a mechanical deformation or a mechanical bending of the suction cup by means of the demounting means. In this way it can be accomplished to remove the electronic device at very little expense and effort from the holding means.

The demounting means comprises at least one actuator - which is a stiff element separate from the suction cup - movably attached to the basic body. The actuator may for instance be a push button. It is moved from a starting position into a final position in which the actuator causes a bending of the suction cup. The user thus merely needs to move the actuator, in order to release the connection between the suction cup and the electronic device and thus remove the electronic device from the holding means. In this way the user can demount the electronic device by means of a single hand from the holding means.

The demounting means may also include a reset element, which is designed to reset the actuator into the starting position. The reset element may for instance be a reset spring. Then the actuator can quasi automatically be moved from the final position back into the starting position, and the electronic device can be connected to the suction cup again.

Preferably, the actuator can be linearly moved from the starting position into the final position. This means that the actuator can be slidably mounted on the basic body - in particular on the holder. Such design of the actuator is particularly user-friendly. Namely, the user just needs to push the actuator to release the connection between the suction cup and the electronic device.

In one embodiment the actuator has a recess in which an extension or a lip of the suction cup is received. Upon moving the actuator from the starting position into the final position, the extension thus is moved together with the actuator, and the suction cup is deformed. This means that, upon moving the actuator, the extension of the suction cup quasi is carried along and thus moved together with the actuator. The suction cup thus is pulled at the extension by the actuator and deforms, so that the vacuum chamber is opened between the suction cup and the electronic device. Thus, the connection between the suction cup and the electronic device can be released reliably and quickly.

It proves particularly advantageous if the demounting means comprise two such actuators. The actuators can be arranged at opposing edges of the basic body - in particular the holder - and be moved towards each other from the corresponding starting position into the corresponding final position, in order to bend the suction cup. The actuators thus can be pressed in the direction towards each other, in order to release the connection between the suction cup and the electronic device. The demounting of the electronic device from the basic body of the holding means thus is particularly simple: The user can push the two actuators with two fingers of the same hand, and the electronic device immediately "jumps" between the two fingers in the hand of the user. Thus it is also prevented that the electronic device is dropped. The user namely grips the electronic device immediately after actuating the two actuators.

Further features of the invention appear from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail by way of individual preferred embodiments as well as with reference to the attached drawings.

There show:
- Fig. 1: a schematic and perspective view of a system comprising a mobile phone, a camera, and a holding means according to one embodiment of the invention;
- Fig. 2: a schematic and perspective view of a reverse side of a carrier or holder to which the mobile phone is fixed;
- Fig. 3: a schematic and perspective view of a front side of the holder according to Fig. 2;
- Fig. 4: a schematic and perspective view of the holding means according to Fig. 1 and the camera, wherein a fastener for fastening the camera is explained in more detail;
- Fig. 5: a schematic view of the holder and a connection part in an unmounted state;
- Fig. 6: a schematic view of an actuator, by means of which a connection with the holder and the mobile phone can be released;
- Fig. 7: a schematic view of the front side of the holder in the mounted state;
- Fig. 8: a schematic view of a reverse side of a housing halve of the holder in the unmounted state;
- Fig. 9: the reverse side of the housing halve in the mounted state;
- Fig. 10: a schematic lateral view of the holder with a suction cup for fastening a mobile phone attached thereto;
- Fig. 11: the schematic lateral view according to Fig. 10, wherein the suction cup is bent or deformed by the actuators;
- Fig. 12 and 13: schematic views of the corresponding connection parts pivotably mounted
- Fig. 14 to 16: a schematic view of a procedure of fastening a mobile phone to the holder; and
- Fig. 17 to 19: a schematic view of a procedure of demounting the mobile phone from the holder.

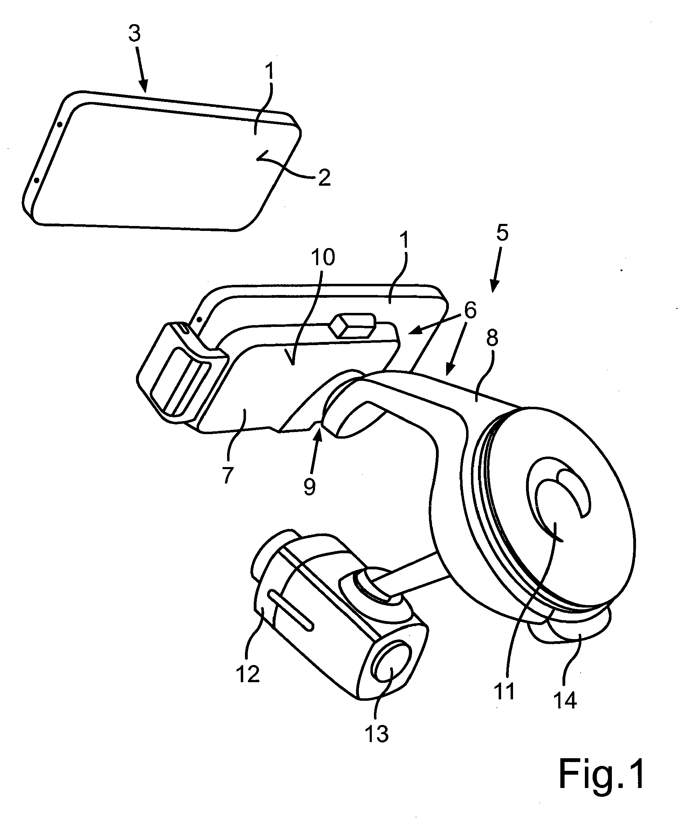

In Fig. 1 a system according to one embodiment of the invention is shown. It includes a mobile phone 1, which is an electronic device. The mobile phone 1 has a reverse side 2, as well as a front side 3, on which a touch screen is arranged. The mobile phone 1 can be operated by means of the touch screen. Alternatively, also a navigation device or a PDA can be employed.

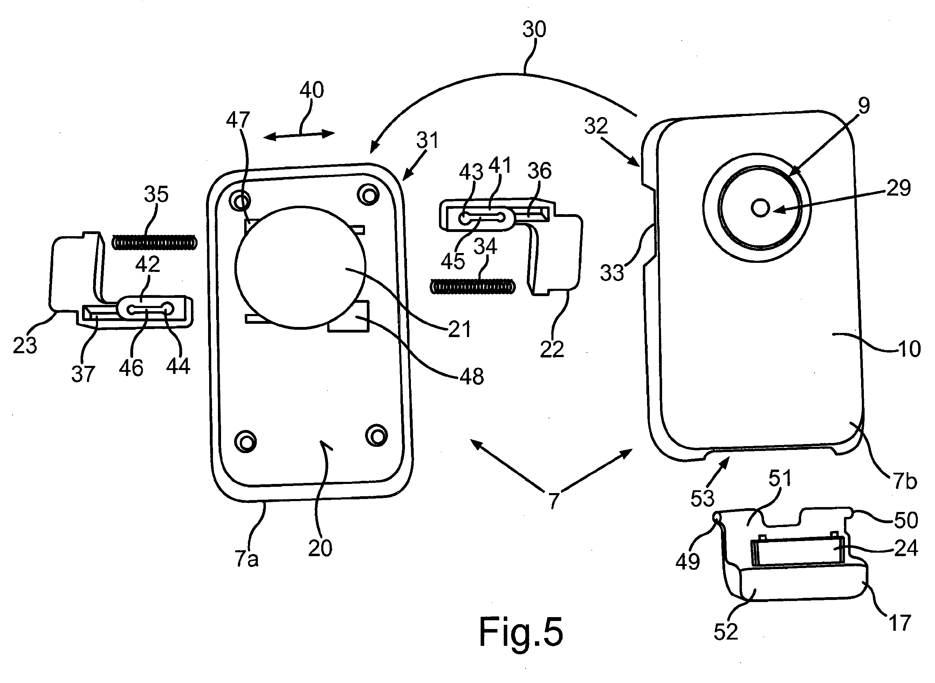

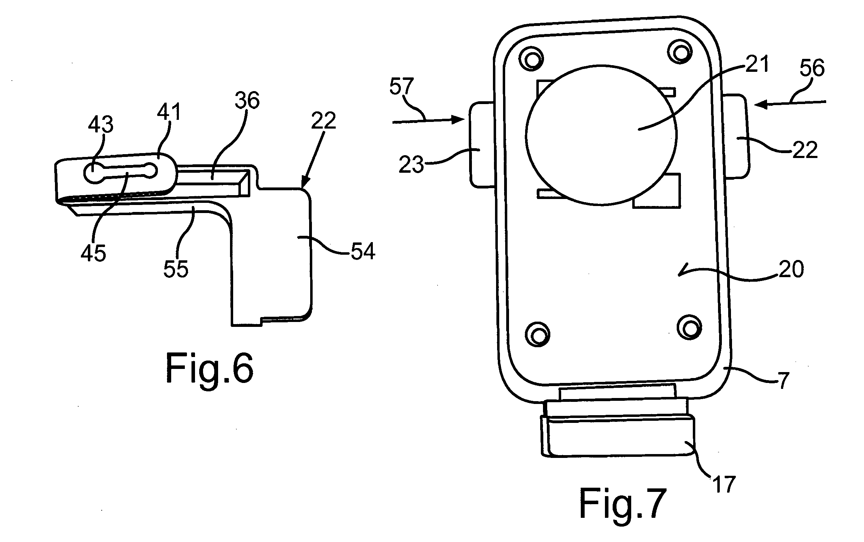

For fastening the mobile phone 1 to a windscreen 4 (see Figs. 5 and 6), a holding means 5 is provided. The holding means 5 includes a basic body 6, which in general serves for bearing the mobile phone 1. The basic body 6 comprises a rectangular and sheet-like holder 7, as well as an arm 8, which is hinged via a ball joint 9 to a reverse side 10 of the holder 7. The holder 7 thus can be moved relative to the arm 8 in a number of degrees of freedom.

The holder 7 is designed for holding or carrying the mobile phone 1; the mobile phone 1 can be attached to the holder 7.

The holding means 5 is fixed by means of a suction cup 11 to the windscreen 4, the suction cup 11 being an integral part of a fastening unit for fastening the basic body 5 to the windscreen. The suction cup 11 is a rubber element and allows for mounting the holding means 5 to the windscreen 4. The suction cup 11 in essence has the shape of a circle or a disk. If the suction cup 11 is pressed against the windscreen 4, a vacuum chamber is formed between the suction cup 11 on the one hand and the windscreen 4 on the other hand, and the holding means 5 is held to the windscreen 4 due to an air pressure, which acts upon the suction cup 11.

To the arm 8 also a camera 12 can be fastened, which can be switched on and off again by means of a push button 13.

At the basic body 6 moreover an actuator 14 is movably arranged, the function of which is set out in further details further below.

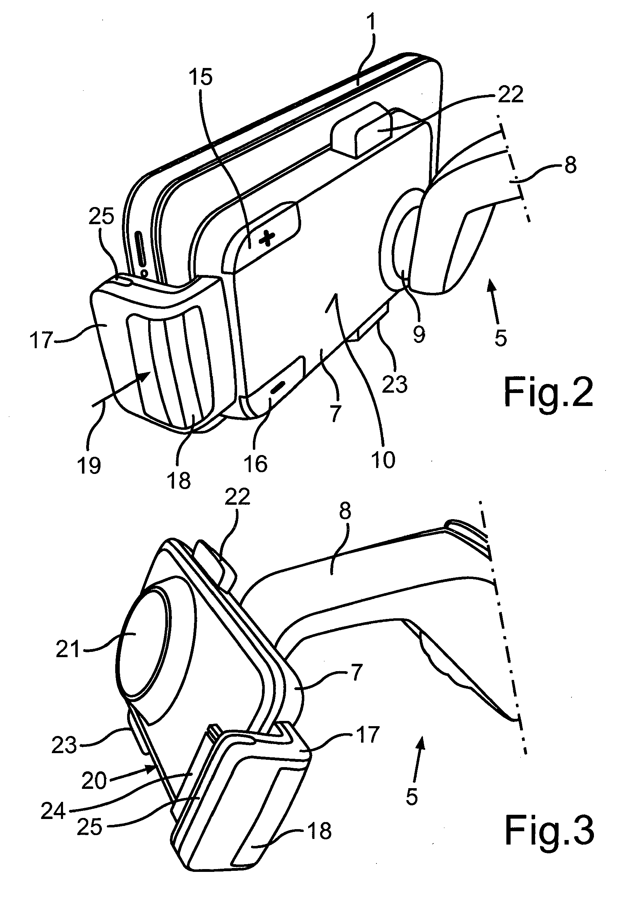

In Fig. 2 the reverse side 10 of the holder 7 with the mobile phone 1 mounted thereon is shown in more detail. On the reverse side 10 of the holder 7 two operating buttons 15, 16 are arranged opposite to each other, which for example serve for adjusting the volume of an acoustic signal output by the mobile phone 1. Through pushing the operating button 15 the volume can be raised; through pushing the operating button 16 the volume can be lowered. At the holder 7 a connecting part 17 is pivotably mounted which has an electronic interface - such as a plug - for connecting the mobile phone 1. This electronic interface may be a standard interface. At the connecting part 17 a further operating button 18 is arranged, which can be pushed in the direction of the holder 7, namely as shown by arrow 19. By means of this operating button 18 a further function of the mobile phone 1 can be performed. The operating button 18 can for example be a hard key for applications of the mobile phone 1.

The connecting part 17 is in the form of a hook pivotably mounted on the holder 7. The connecting part 17 in this set-up can be pivoted about a pivot axis extending in parallel to an edge of the holder 7 adjacent to the connecting part 17.

In Fig. 3 a front side 20 of the holder 7 is shown (without the mobile phone 1). On the front side 20 a further suction cup 21 is arranged, which is designed for attaching the mobile phone 1 to the holder 7. For attaching the mobile phone 1 to holder 7 the mobile phone 1 is pressed with its reverse side 2 against the suction cup 21. For releasing this connection the user merely needs to push two actuating elements 22, 23 arranged at opposing longitudinal edges of the holder 7. Then the suction cup 21 is deformed and the mobile phone 1 can be detached from the holder 7 again. Before the mobile phone 1 is pressed against the suction cup 21, it is first of all connected to the above-named electronic interface (referred to as 24 in Fig. 3), which protrudes from the angled connection part 17 and points in the direction towards the suction cup 21.

On the connection part 17 moreover an LED 25 is arranged, which for instance can laminate when the mobile phone 1 is connected to the interface 24.

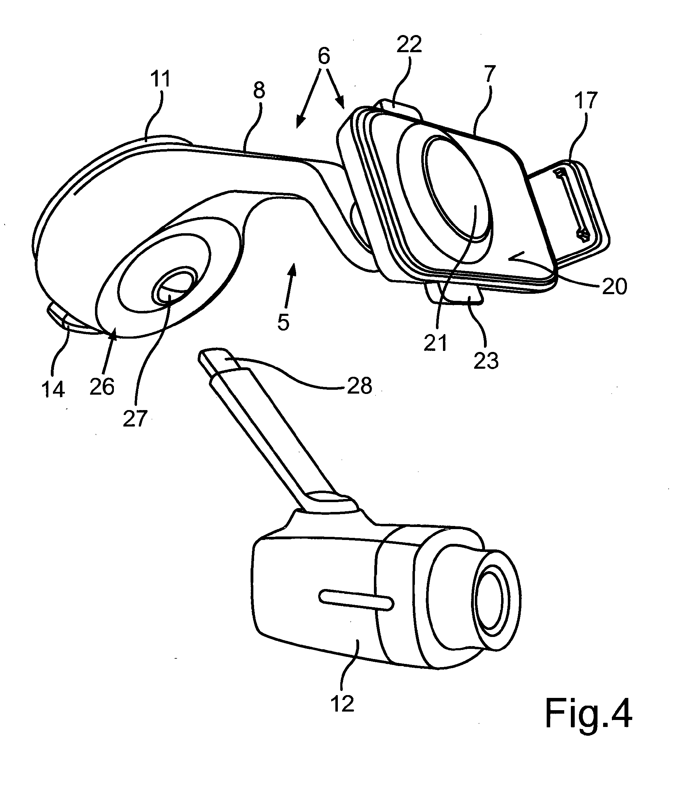

Making reference to Fig. 4 the fastening of the camera 12 to the arm 8 of the basic body is described in more detail. The arm 8 has an essentially cylindrical fastening portion 26. At one side of the fastening portion 26 there is the suction cup 11 for fastening the holding means 5 to the windscreen 4; at the opposite side a recess 27 is formed in the fastening portion 26, in which an end portion of a pin 28 of the camera 12 can be received. If the pin 28 is received in the recess 27, a magnetic force acts, which holds the pin 28 within the recess 27. A magnet here can either be arranged on the side of the pin 28 or else within the recess 27.

Now the interest is focussed on the design of the holder or carrier 7 and the fastening of the mobile phone 1 to the holder 7. In Fig. 5 the holder 7 is shown together with the hook-shaped connection part 17 in the unmounted state. The holder 7 is a sheet-like and rectangular element comprising two housing halves 7a, 7b. Fig. 5 shows on the left side a first housing halve 7a with the front side 20 of the holder 7. On the right side in Fig. 5 a second housing halve 7b with the reverse side 10 and a part of the ball joint 9 is shown. On the reverse side 10 a sleeve 29 is formed in which a ball-shaped bearing pin of the arm 8 can be received.

As shown by arrow 30 the two housing halves 7a, 7b can be connected to each other by bringing corresponding inner sides 31, 32 into contact with each other. The second housing halve 7b has recesses 33 on its longitudinal edges through which the actuators 22, 23 are pulled in the mounted state.

On the front side 20 of the housing halve 7a the suction cup 21 is attached which serves for fastening the mobile phone 1 to the holder 7. For this purpose the mobile phone 1 needs to be pressed against the suction cup 21.

In the mounted state of the holder 7 the actuators 22, 23 need to be pressed in the direction towards each other, in order to deform the suction cup 21 and to thus release the connection between the suction cup and the mobile phone 1. The actuators 22, 23 in this process are pushed from the corresponding starting position into a final position, in which the suction cup 21 is deformed. For resetting the actuators 22, 23 into the corresponding starting position reset elements in the form of reset springs 34, 35 are provided. This means that these reset springs 34, 35 provide for the resetting of the actuators 22, 23 into the corresponding starting position, once the user releases the actuators 22, 23.

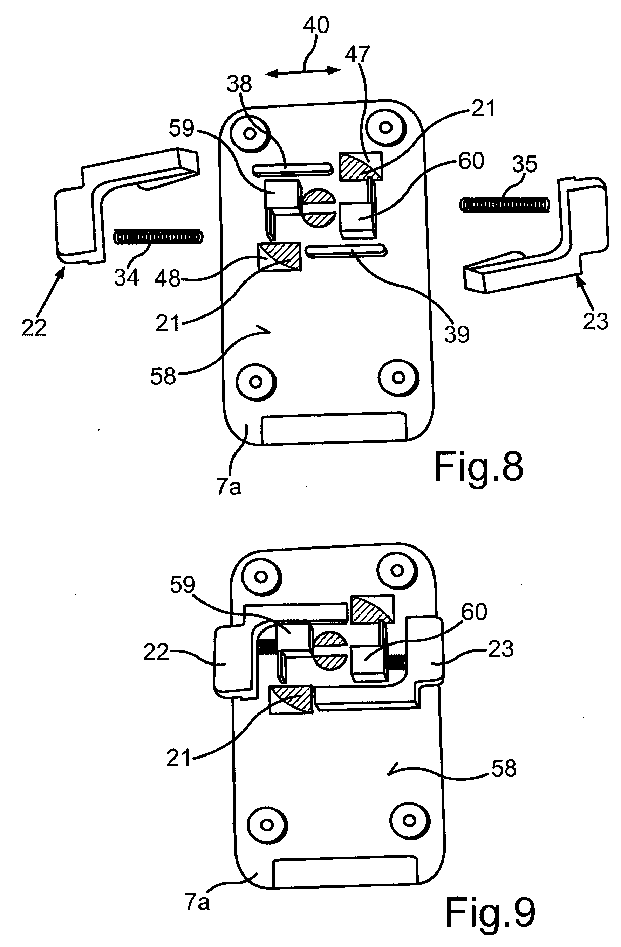

The actuators 22, 23 have a guiding groove 36, 37 each, in which a corresponding guiding rib 38, 39 (see Fig. 8) can be received, so that the actuators 22, 23 are slidably mounted on the holder 7. The actuators 22, 23 in this process are moved in transverse direction 40 of the holder 7.

The actuators 22, 23 moreover have a tongue 41, 42, which protrude from a respective main body of the actuators 22, 23 and are arranged at an angle thereto. In the tongues 41, 42 each a hole or a recess 43, 44 is formed to which a small slot 45, 46 immediately connects. While assembling the holder 7, the tongues 41, 42 are inserted through corresponding through-openings 47, 48 in the first housing halve 7a. In the mounted state of the holder 7 the tongues 41, 42 thus are on the same side of the holder 7 as the suction cup 21. The corresponding main bodies of the actuators 22, 23, however, are positioned beyond the first housing halve 7a, namely in a clearance between the first and the second housing halves 7a, 7b. Then corresponding extensions or lips of the suction cup 21 are received in the holes 43 and 44 of the tongues 41, 42, the extensions or lips protruding from the suction cup 21. These extensions may be provided in the form of small rods with a head, which can be passed through the corresponding hole 43, 44. Upon moving the actuators 22, 23, the extensions of the suction cup 21 together with the holes 43, 44 are moved in the transverse direction 40, so that the suction cup 21 bends and deforms. In this way the vacuum chamber between the suction cup 21 and the mobile phone 1 can be disrupted and the connection be released.

Fig. 5 moreover shows the connection part 17 with the electronic interface 24. This connection part 17 is hinged to the holder 7 via two pins 49, 50 that protrude laterally outward. The connection part 17 has a first portion 51 which is connected to the holder 7. A second portion 52 connects immediately to a first portion 51, the second portion 52 forming a right angle with the first portion 51. On the second portion 52 is arranged the electronic interface 24. For receiving the first portion 51 a recess 53 is formed in the second housing halve 7b.

In Fig. 6 the actuator 22 is shown in more detail. The main body of the actuator 22 in principle consists of two parts, namely of an operating portion 54, which in the mounted state of the holder 7 protrudes from it and can be actuated by the user, and of a groove-like guidance portion 55, in which the guiding groove 36 is formed. The guidance portion 55 extends in the transverse direction of the holder 7. At the end of the guidance portion 55 facing away from the operating portion 54 the tongue 41 connects to this guidance portion 55, the tongue 41 forming an angle from the value range of 120° to 180° with the guidance portion 55. As has already been set out, an extension of the suction cup 21 is received in the hole 43; the extension can have the form of a small rod with a connection head. Upon activation of the actuator 22 the extension of the suction cup 21 is pulled by the tongue 41 and the suction cup 21 deformed.

Fig. 7 shows the front side 20 of the holder 7 in the mounted state. As may be gathered from Fig. 7, the actuators 22, 23 protrude laterally from the holder 7, namely at the corresponding longitudinal edges of the holder 7. In order to bend the suction cup 21, the actuators 22, 23 are pushed in a direction towards each other, as is indicated by arrows 56,57.

In Fig. 8 a reverse side 58 of the first housing halve 7a of the holder 7 is shown in the unmounted state. As has already been set out, at the reverse side 58 two guiding ribs or guiding edges 38, 39 are formed in transverse direction 40. These guiding ribs 38, 39 are received in the guiding grooves 36, 37 of the actuators 22, 23, so that the actuators 22, 23 can be linearly moved on the holder 7. The two reset springs 34, 35 are supported at corresponding support elements 59, 60 that are formed on the reverse side 58 as elevations. The tongues 41, 42 of the actuators 22, 23 are inserted through the through-openings 47, 48.

In Fig. 9 the reverse side 58 of the housing halve 7a is shown in the mounted state. In this state the two tongues 41, 42 are positioned on the external side of the housing halve 7a, namely together with the suction cup 21.

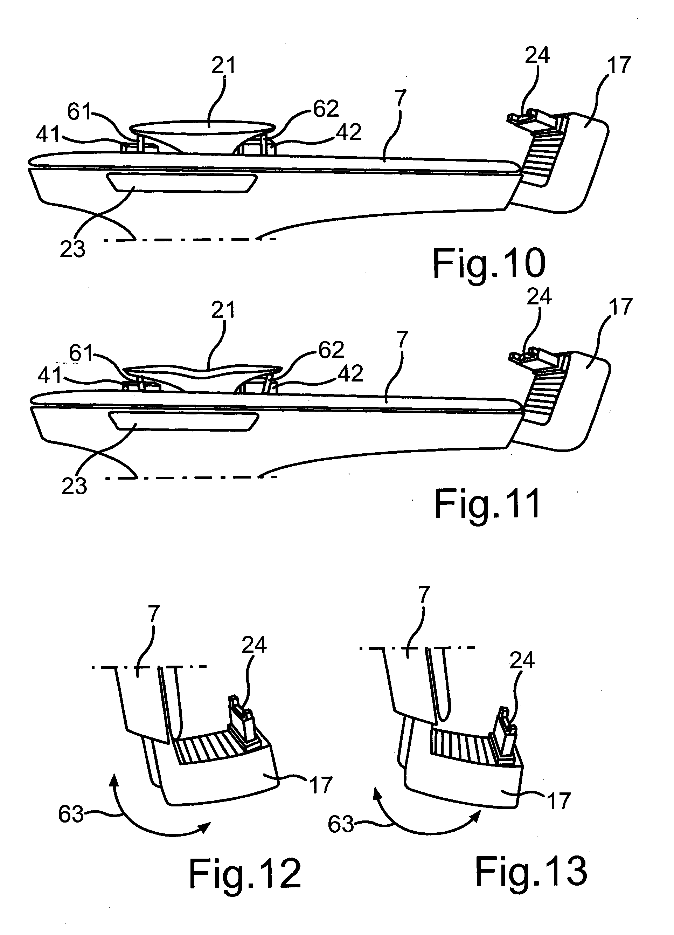

Figs. 10 and 11 provide a lateral view of the holder 7 in the mounted state. In Fig. 10 the actuators 22, 23 are in their starting positions, so that the suction cup 21 has its basic shape. Upon activation of the actuators 22, 23 the suction cup 21 deforms, as is shown in Fig. 11. In this way the connection between the mobile phone 1 and the suction cup 21 can be released reliably. In Figs. 10 and 11, moreover, said extensions protruding from the reverse side of the suction cup 21 are shown, which now are designated by reference signs 61, 62.

Figs. 12 and 13 show the connection part 17 with an electronic interface 24 attached thereto for connecting the mobile phone 1. The connection part 17 is pivotably mounted on the holder 7 and can be pivoted about a pivot axis running in parallel to the adjacent edge of the holder 7 or coinciding with this edge. The pivot movement of the connection part 17 according to the shown arrow 63 allows for an easy mounting of the mobile phone 1 on the holder 7: The mobile phone 1 to start with can be connected to an interface 24 and then be pivoted together with the connection part 17 in the direction towards the suction cup 21.

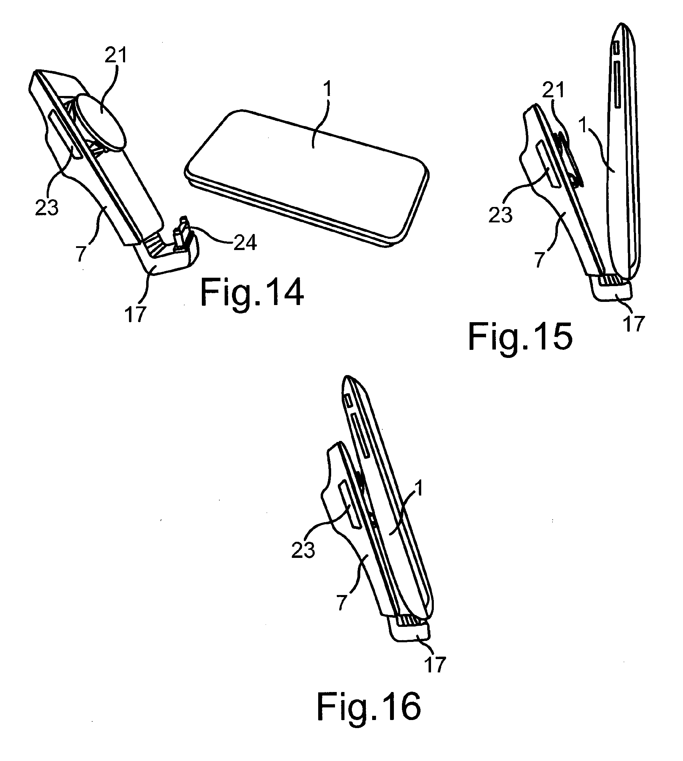

The attaching of the mobile phone 1 on the holder 7 is now explained in more detail with reference to Figs. 14 to 16. As may be gathered from Figs. 14 to 15, the mobile phone firstly is coupled to the interface 24. According to Fig. 15 the mobile phone 1 is already positioned on the connection part 17. Now the mobile phone 1 needs to be pivoted together with the connection part 17 in the direction towards the suction cup 21 until the mobile phone 1 reaches the suction cup 21. Once the suction cup 21 is reached, it attaches by suction to the surface of the mobile phone 1, as is shown in Fig. 16.

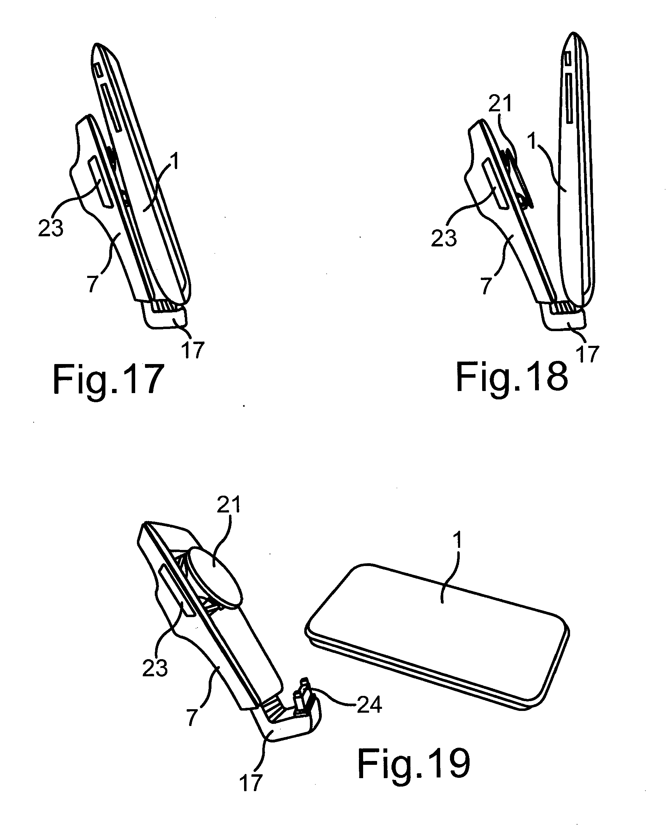

A demounting procedure is described in more detail with reference to Figs. 17 to 19: In order to release the connection between the suction cup 21 and the mobile phone 1, the user pushes the two actuators 22, 23 in a direction towards each other. Upon release of the connection the mobile phone 1 is only held by the connection part 17, as shown in Fig. 18. The mobile phone 1 can now be removed from the connection part 17, as is shown in Fig. 19.

## Claims

1. A holding means (5) for holding an electronic device (1) to a vehicle component (4), in particular to a windscreen of a vehicle, the holding means (5) comprising a basic body (6) for carrying an electronic device (1) as well as a fastening unit (11) for fastening the basic body (6) to the vehicle component (4),
**characterized by**
a suction cup (21) arranged on the basic body (6) for attaching the electronic device (1) to the basic body (6), demounting means for deforming the suction cup (21) and thereby for releasing a connection between the suction cup (21) and the electronic device (1) while the demounting means comprise at least one actuator (22, 23) movably arranged on the basic body (6), in particular on the holder (7), the actuator (22. 23) being movably from a starting position into a final position, in which the actuator (22, 23) causes a deformation of the suction cup (21).

2. A holding means (5) according to claim 1,
**characterized in that**
the suction cup (21) is arranged on the front side (20) of a rectangular and sheet-like holder (7) of the basic body (6).

3. A holding means (5) according to claim 2,
**characterized in that**
a connection part (17) with an electronic interface (24) for the electronic device (1) is pivotably mounted on the holder (7).

4. A holding means (5) according to claim 1,
**characterized in that**
the demounting means comprise a reset element (34, 35), in particular a reset spring, for resetting the actuator (22, 23) into the starting position.

5. A holding means (5) according to claim 1 or 4,
**characterized in that**
the actuator (22, 23) is linearly slidable from the starting position into the final position.

6. A holding means (5) according to any one of claims 1 to 5,
**characterized in that**
the actuator (22, 23) has a recess (43, 44), in which an extension (61, 62) of the suction cup (21) is received, so that upon moving the actuator (22, 23) from the starting position into the final position the extension (61, 62) is moved by means of the actuator (22, 23), in order to deform the suction cup (21).

7. A holding means (5) according to any one of claims 1 to 6,
**characterized in that**
the demounting means comprise two named actuators (22, 23), which are arranged on two opposite edges of the basic body (6), in particular of the holder (7), and which are movable in the direction towards each other from the corresponding starting position to the corresponding final position, in order to deform the suction cup (21).

## Patentansprüche

1. Halteeinrichtung (5) zum Halten einer elektronischen Vorrichtung (1) an einer Fahrzeugkomponente (4), insbesondere einer Windschutzscheibe eines Fahrzeugs, wobei die Halteeinrichtung (5) einen Grundkörper (6) zum Tragen einer elektronischen Vorrichtung (1) sowie eine Befestigungseinheit (11) zum Befestigen des Grundkörpers (6) an der Fahrzeugkomponente (4) umfasst,
**gekennzeichnet durch**
einen an dem Grundkörper (6) angeordneten Saugnapf (21) zum Anbringen der elektronischen Vorrichtung (1) an dem Grundkörper (6), Demontagemittel zur Verformung des Saugnapfs (21) und **dadurch** zum Lösen einer Verbindung zwischen dem Saugnapf (21) und der elektronischen Vorrichtung (1), wobei die Demontagemittel mindestens einen am Grundkörper (6), insbesondere am Halter (7), bewegbar angeordneten Aktuator (22, 23) umfassen, wobei der Aktuator (22, 23) aus einer Startposition in eine Endposition, in der der Aktuator (22, 23) eine Verformung des Saugnapfes (21) bewirkt, bewegbar ist.

2. Halteeinrichtung (5) nach Anspruch 1,
**dadurch gekennzeichnet, dass**
der Saugnapf (21) an der Vorderseite (20) eines rechteckigen und flächigen Halters (7) des Grundkörpers (6) angeordnet ist.

3. Halteeinrichtung (5) nach Anspruch 2,
**dadurch gekennzeichnet, dass**
ein Verbindungsteil (17) mit einer elektronischen Schnittstelle (24) für die elektronische Vorrichtung (1) an dem Halter (7) schwenkbar befestigt ist.

4. Halteeinrichtung (5) nach Anspruch 1,
**dadurch gekennzeichnet, dass**
die Demontagemittel ein Rückstellelement (34, 35), insbesondere eine Rückstellfeder, zum Rückstellen des Aktuators (22, 23) in die Startposition umfassen.

5. Halteeinrichtung (5) nach Anspruch 1 oder 4,
**dadurch gekennzeichnet, dass**
der Aktuator (22, 23) aus der Startposition in die Endposition linear verschiebbar ist.

6. Halteeinrichtung (5) nach einem der Ansprüche 1 bis 5,
**dadurch gekennzeichnet, dass**
der Aktuator (22, 23) eine Aussparung (43, 44) aufweist, in der eine Verlängerung (61, 62) des Saugnapfs (21) aufgenommen ist, so dass die Verlängerung (61, 62) bei Bewegung des Aktuators (22, 23) aus der Startposition in die Endposition zur Verformung des Saugnapfs (21) durch den Aktuator (22, 23) bewegt wird.

7. Halteeinrichtung (5) nach einem der Ansprüche 1 bis 6,
**dadurch gekennzeichnet, dass**
die Demontagemittel zwei derartige Aktuatoren (22, 23) umfassen, die an zwei gegenüberliegenden Rändern des Grundkörpers (6), insbesondere des Halters (7), angeordnet sind und die zur Verformung des Saugnapfs (21) aus der entsprechenden Startposition in die entsprechende Endposition aufeinander zu bewegbar sind.

## Revendications

1. Moyen de maintien (5) destiné à maintenir un dispositif électronique (1) sur un composant de véhicule (4), en particulier sur un pare-brise de véhicule, le moyen de maintien (5) comprenant un corps de base (6) pour supporter un dispositif électronique (1) ainsi qu'une unité de fixation (11) pour fixer le corps de base (6) au composant de véhicule (4),
**caractérisé par**
une ventouse (21) agencée sur le corps de base (6) pour attacher le dispositif électronique (1) au corps de base (6) et des moyens de démontage pour déformer la ventouse (21) et ainsi libérer une liaison entre la ventouse (21) et le dispositif électronique (1), les moyens de démontage comprenant au moins un actionneur (22, 23) agencé de manière déplaçable sur le corps de base (6), en particulier sur l'élément de retenue (7), l'actionneur (22, 23) étant déplaçable à partir d'une position de départ jusqu'à une position finale, dans laquelle l'actionneur (22, 23) provoque une déformation de la ventouse (21).

2. Moyen de maintien (5) selon la revendication 1,
**caractérisé en ce que**
la ventouse (21) est agencée sur le côté avant (20) d'un élément de retenue (7) rectangulaire et de type feuille du corps de base (6).

3. Moyen de maintien (5) selon la revendication 2,
**caractérisé en ce**
**qu'**une partie de liaison (17) pourvue d'une interface électronique (24) pour le dispositif électronique (1) est montée à pivotement sur l'élément de retenue (7).

4. Moyen de maintien (5) selon la revendication 1,
**caractérisé en ce que**
les moyens de démontage comprennent un élément de rappel (34, 35), en particulier un ressort de rappel, pour rappeler l'actionneur (22, 23) jusqu'à la position de départ.

5. Moyen de maintien (5) selon la revendication 1 ou 4,
**caractérisé en ce que**
l'actionneur (22, 23) peut glisser linéairement à partir de la position de départ jusqu'à la position finale.

6. Moyen de maintien (5) selon l'une quelconque des revendications 1 à 5,
**caractérisé en ce que**
l'actionneur (22, 23) a un évidement (43, 44) dans lequel est reçu un prolongement (61, 62) de la ventouse (21), de telle sorte que, lors du déplacement de l'actionneur (22, 23) à partir de la position de départ jusqu'à la position finale, le prolongement (61, 62) soit déplacé au moyen de l'actionneur (22, 23), afin de déformer la ventouse (21).

7. Moyen de maintien (5) selon l'une quelconque des revendications 1 à 6,
**caractérisé en ce que**
les moyens de démontage comprennent deux dits actionneurs (22, 23), lesquels sont agencés sur deux côtés opposés du corps de base (6), en particulier de l'élément de retenue (7), et lesquels sont déplaçables en direction l'un de l'autre à partir de la position de départ correspondante jusqu'à la position finale correspondante, afin de déformer la ventouse (21).
